# FASCICULE DE BREVET EUROPEEN

(11) **EP 0 818 658 B1**
(45) Date de publication et mention de la délivrance du brevet: **04.06.2003**
(21) Numéro de dépôt: 97401658.6
(22) Date de dépôt: 10.07.1997
(51) Int. Cl.: F23R 3/50, F23R 3/10, F23R 3/28

(54) **Chambre de combustion anti-nox à injection de carburant de type annulaire**
Ringbrennkammer mit reduzierter Nox-Produktion
Low NOx annular combustion chamber

(30) Priorité: 11.07.1996 FR 9608656
(43) Date de publication de la demande: 14.01.1998
(73) Titulaire: SNECMA MOTEURS, 75015 Paris (FR)
(72) Inventeur: Alary, Jean-Paul Daniel, 75015 - Paris (FR); Courtet, Stéphane Jean-Marie, 77000 - Melun (FR); Desaulty, Michel André Albert, 77240 - Vert Saint Denis (FR)
(74) Mandataire: Berrou, Paul

(56) Documents cités:
- EP-A- 0 059 490
- GB-A- 2 057 672
- GB-A- 2 098 719
- GB-A- 2 211 596
- GB-A- 2 252 152
- US-A- 2 552 851
- US-A- 2 920 449
- US-A- 4 158 949

## Description

La présente invention se rapporte à une chambre de combustion annulaire comprenant un axe de symétrie, des parois interne et externe annulaires par rapport audit axe, un fond qui s'étend transversalement par rapport audit axe et qui, en coopération avec lesdites parois interne et externe, délimite une enceinte de combustion qui présente en aval une sortie annulaire pour l'échappement des gaz de combustion, une pluralité d'injecteurs de carburant disposés dans des ouvertures ménagées dans le fond et une source de carburant sous pression.

Les chambres de combustion, de type annulaire, des turbomachines aéronautiques comportent de manière classique, au niveau de fond de chambre, des dispositifs d'injection de carburant et d'air.

Ces dispositifs d'injection se présentent, par exemple, sous la forme de bols disposés à une certaine distance les uns des autres. Chaque bol comporte un dispositif d'injection de carburant, une vrille de turbulence pour l'air de pulvérisation du carburant et une rangée de trous pour l'injection d'air dans le cône de carburant pulvérisé.

Les bols étant de forme circulaire, il s'ensuit un nombre important de dispositifs d'injection. De plus des zones mortes subsistent entre chaque bol, et le profil circonférentiel des températures est hétérogène, ceci étant lié aux points d'injection, les zones mortes étant, quant à elles, créatrices de Nox.

US-A-2 920 449 dévoile une chambre annulaire dans laquelle le fond de chambre comporte une ouverture annulaire délimité par deux parois cylindriques espacées et par laquelle de l'air pénètre axialement dans la chambre. Une rampe annulaire d'injection, avec deux rangées d'orifices radiaux, est disposée dans cette ouverture annulaire, et un anneau divergent est prévu en aval de la rampe d'injection pour séparer les gaz de combustion délivrés dans la zone de combustion de l'enceinte de combustion, en deux flux annulaires dirigés respectivement vers les parois interne et externe.

Dans FR-A-2 698 157 il a été proposé un système d'injection à bols elliptiques. Cette disposition permet de réduire le nombre d'injecteurs et d'améliorer sensiblement le profil circonférentiel des températures.

Le but de la présente invention est de réaliser une homogénéité quasi-parfaite du carburant, afin de diminuer les émissions de Nox et d'améliorer le profil des températures tout en diminuant le nombre de pièces.

Le but est obtenu par l'ensemble des caractéristiques suivantes :
a) le fond de chambre comporte une virole interne et une virole externe annulaires par rapport audit axe et délimitant, en amont de la zone de combustion de l'enceinte de combustion, une chambre annulaire évasée vers l'aval, les viroles interne et externe étant reliées à leurs extrémités amont par des entretoises régulièrement espacées qui délimitent entre elles des ouvertures arquées;
b) chaque injecteur de carburant comporte une rampe d'injection arquée traversant l'une desdites ouvertures arquées, de telle manière que l'ensemble des injecteurs forme une rampe d'injection annulaire discontinue partageant la chambre annulaire en un espace annulaire interne délimité par ladite rampe et la virole interne et en un espace annulaire externe délimité par ladite rampe et la virole externe;
c) la rampe d'injection comporte une rangée interne d'orifices et une rangée externe d'orifices destinés à injecter du carburant respectivement dans l'espace annulaire interne et l'espace annulaire externe;
d) la virole interne et la virole externe comportent respectivement une vrille interne et une vrille externe en amont des rangées d'orifices, destinées à alimenter respectivement l'espace annulaire interne et l'espace annulaire externe en flux de comburant contrarotatifs autour dudit axe.
e) les orifices d'injection de carburant sont inclinés radialement de telle manière que le carburant fourni par chaque rangée d'orifices est injecté dans l'espace annulaire correspondant dans le sens de circulation circonférentielle du flux de comburant alimentant ledit espace annulaire .

Les avantageuses dispositions suivantes sont en outre adoptées:

Les axes des orifices d'injection de carburant sont décalés radialement d'un angle compris entre 40° et 50°.

La rampe d'injection de chaque injecteur comporte deux surfaces coniques convergeant vers l'intérieur de l'enceinte de combustion sur chacune desquelles débouchent les orifices d'une rangée d'orifices d'injection de carburant, lesdites surfaces étant reliées en amont par une surface torique.

La partie torique d'une rampe d'injection est encastrée dans une échancrure arquée d'un fourreau qui présente deux parois oblique à l'entrée de ladite échancrure pour permettre le positionnement de ladite rampe dans ladite échancrure lors du montage, ledit fourreau étant monté avec jeu en amont des vrilles interne et externe entre deux entretoises successives.

Les viroles interne et externe comportent en aval de la rampe d'injection une pluralité d'orifices d'injection de comburant.

D'autres avantages et caractéristiques de l'invention ressortiront à la lecture de la description suivante faite à titre d'exemple et en référence aux dessins annexés dans lesquels :

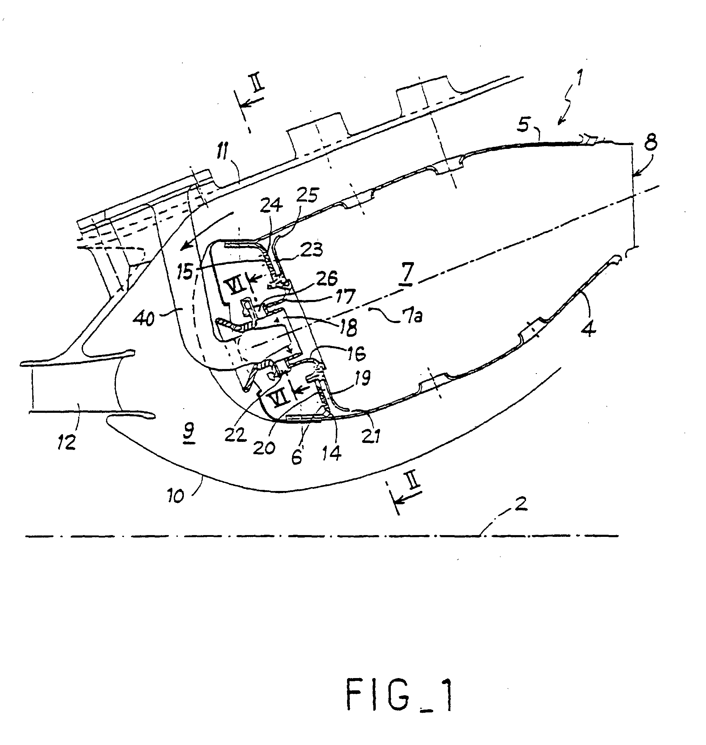

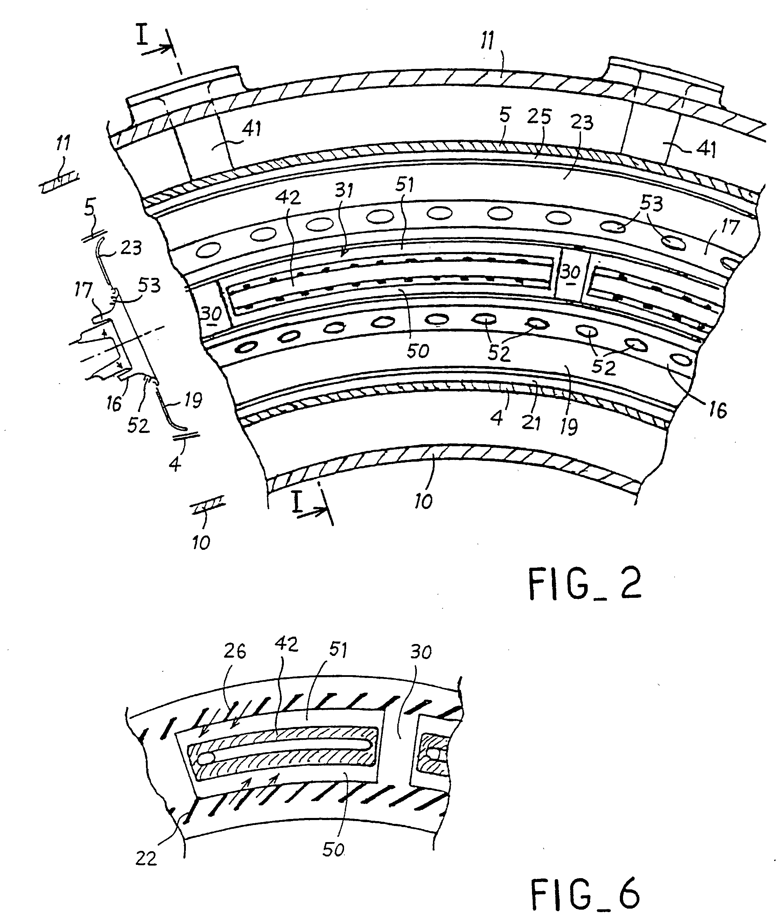

- la figure 1 est une représentation schématique en coupe d'une chambre de combustion conforme à la présente invention, coupe prise selon un plan passant par l'axe de symétrie, et la ligne I,I de la figure 2;
- la figure 2 est une coupe transversale d'une partie de la chambre de combustion de la figure 1, cette coupe étant prise selon la ligne II II de la figure 1;

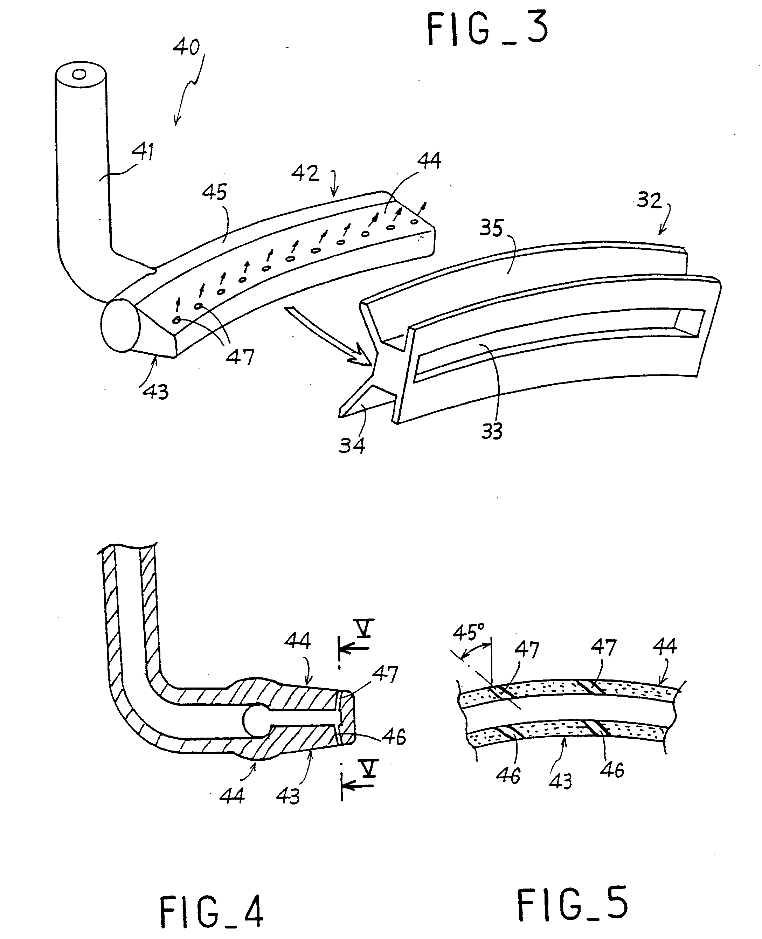

- la figure 3 est une vue en perspective et éclatée d'un injecteur de carburant et du fourreau de montage de la rampe d'injection sur le fond de chambre;
- la figure 4 est une coupe axiale de l'injecteur de la figure 3;
- la figure 5 est une coupe de la rampe d'injection selon la ligne V V de la figure 4;
- la figure 6 est une coupe selon la ligne VI VI de la figure 1.

Les dessins montrent une chambre de combustion annulaire 1, d'axe de symétrie 2, qui comporte une paroi annulaire interne 4 et une paroi annulaire externe 5 espacée radialement de la paroi interne 4. Ces deux parois 4 et 5 sont reliées en amont par un fond de chambre 6, afin de délimiter une enceinte de combustion 7 comportant en aval une sortie annulaire 8 par laquelle les gaz brûlés s'évacuent vers une turbine non représentée. La chambre de combustion 1 loge dans un carter 9 délimité par une cloison annulaire interne 10 et une cloison annulaire externe 11, espacées radialement. Ce carter 9 est alimenté en amont en air comprimé par un diffuseur 12 disposé en aval d'un compresseur, non représenté, entraîné par la turbine.

Le fond de chambre 6 disposé sensiblement transversalement par rapport à l'axe de symétrie 2 est réalisé par deux plaques annulaires 14, 15 fixées respectivement aux extrémités amont des parois interne 4 et externe 5 et s'étendant l'une vers l'autre, et deux viroles annulaires 16, 17 qui délimitent entre elles, en amont de la zone de combustion 7a de l'enceinte de combustion 7 une chambre annulaire 18 évasée vers l'aval.

La virole annulaire interne 16 est fixée à son extrémité aval sur le bord externe de la plaque annulaire 14, et elle est prolongée, radialement vers l'intérieur par un bouclier thermique 19 parallèle à la plaque annulaire 14.

Cette dernière comporte des orifices 20 d'entrée d'air de refroidissement, cet air s'écoulant par la fente annulaire 21 prévue entre le bouclier thermique 19 et la paroi interne 4. Une vrille interne radiale 22 est prévue à l'extrémité amont de la virole interne 16.

La virole annulaire externe 17 est fixée à son extrémité aval sur le bord interne de la plaque annulaire 15, et elle est prolongée radialement vers l'extérieur par un bouclier thermique 23 parallèle à la plaque annulaire 15. Cette dernière comporte également des orifices 24 par lesquels pénètre de l'air de refroidissement qui s'écoule par la fente 25 qui sépare le bouclier 23 et la paroi externe 5. Une vrille externe radiale 26 est prévue à l'extrémité amont de la virole externe 17.

Les vrilles interne 16 et externe 17 sont disposées radialement à distance l'une de l'autre, et elles sont reliées en amont par une pluralité d'entretoises radiales 30 régulièrement réparties autour de l'axe de symétrie 2 qui délimitent entre elles des ouvertures arquées 31.

En amont de chaque ouverture arquée 31 et entre deux entretoises successives 30, est disposé un fourreau 32 qui présente une échancrure arquée 33 qui débouche dans l'ouverture 31.

Ce fourreau 32 comporte à l'entrée de l'échancrure 33 deux parois de guidage 34, 35 obliques, et il est monté sur le fond de chambre 6 avec un jeu radial et axial permettant des dilations dues au thermique des différences pièces en présence.

Le système d'injection de carburant comporte autant d'injecteurs de carburant 40 qu'il y a d'ouvertures 31 dans le fond de chambre 6.

Chaque injecteur 40 comporte un corps d'injecteur 41 radial et une rampe d'injection 42 qui s'encastre dans une échancrure 33 d'un fourreau 32. La rampe d'injection 42 comporte deux surfaces coniques 43, 44 qui convergent vers l'intérieur de l'enceinte de combustion 7 et qui sont reliées en amont par une surface torique 45 dont le diamètre correspond à la largeur de l'échancrure 33. Deux rangées d'orifices d'injection de carburant 46, 47 débouchent respectivement sur les surfaces coniques 43 et 44. Les axes de ces orifices 46 et 47 sont inclinés radialement de 45° environ.

Le montage d'un injecteur 40, avec sa rampe d'injection 42 dans une échancrure 33 est facilitée par la présence des deux parois de guidage obliques 34 et 35 et par le fait que le fourreau correspondant 32 est monté avec jeu sur le fond de chambre 6.

Vu de l'intérieur de la chambre de combustion, l'ensemble des rampes d'injection 42 forme ainsi une rampe annulaire discontinue qui partage la chambre annulaire 18 en un espace annulaire interne 50 délimitée par la virole interne 16 et la surface conique 43 et un espace annulaire externe 51 délimitée par la virole externe 17 et la surface conique 44 des rampes d'injection 42.

L'espace annulaire interne 50 est alimenté en carburant par la rangée d'orifices 46 et en air de pulvérisation par la vrille interne 22.

L'espace annulaire externe 51 est alimenté en carburant par la rangée d'orifices 47 et en air de pulvérisation par la vrille externe 26.

Les vrilles interne 22 et externe 26 sont prévues de telle manière que les flux d'air injectés dans les espaces annulaires interne 50 et externe 51 sont contrarotatifs autour de l'axe de symétrie 2, l'air pénétrant dans l'espace annulaire interne 50 tourbillonnant dans le sens des aiguilles d'une montre, vue de l'intérieur de l'enceinte 7, et l'air pénétrant dans l'espace annulaire externe 51 tourbillonnant dans le sens inverse des aiguilles d'une montre.

Les orifices d'injection de carburant 46 et 47 sont inclinés de telle manière qu'ils injectent le carburant respectivement dans les espaces annulaires 50 et 51, dans le cas de circulation circonférentielle des flux d'air alimentant ces espaces 50 et 51.

Les parties coniques des viroles interne 16 et externe 17 comportant en outre des orifices 52, 53 pour injecter de l'air dans les cônes de carburant issus des espaces annulaires 50 et 51.

## Revendications

1. Chambre de combustion annulaire comprenant un axe de symétrie (2), des parois interne (4) et externe (5) annulaires par rapport audit axe (2), un fond (6) qui s'étend transversalement par rapport audit axe (2) et qui en coopération avec lesdits parois interne (4) et externe (5) délimite une enceinte de combustion (7) qui présente en aval une sortie annulaire (8) pour l'échappement des gaz de combustion, une pluralité d'injecteurs de carburant (40) disposés dans des ouvertures ménagées dans le fond (6) et une source de comburant sous pression, **caractérisée par le fait que**
a) le fond (6) comporte une virole interne (16) et une virole externe (17) annulaires par rapport audit axe (2) et délimitant, en amont de la zone de combustion (7a) de l'enceinte de combustion (7), une chambre annulaire (18) évasée vers l'aval, les viroles interne (16) et externe (17) étant reliées à leurs extrémités amont par des entretoises (30) régulièrement espacées qui délimitent entre elles des ouvertures arquées (31);
b) chaque injecteur de carburant (40) comporte une rampe d'injection (42) arquée traversant l'une desdites ouvertures arquées (31), de telle manière que l'ensemble des injecteurs forme une rampe d'injection annulaire discontinue partageant la chambre annulaire (18) en un espace annulaire interne (50) délimité par ladite rampe (42) et la virole interne (16) et en un espace annulaire externe (51) délimité par ladite rampe (42) et la virole externe (17);
c) la rampe d'injection (42) comporte une rangée interne d'orifices (46) et une rangée externe d'orifices (47) destinés à injecter du carburant respectivement dans l'espace annulaire interne (50) et l'espace annulaire externe (51);
d) la virole interne (16) et la virole externe (17) comportent respectivement une vrille interne (22) et une vrille externe (26) en amont des rangées d'orifices (46, 47), destinées à alimenter respectivement l'espace annulaire interne (50) et l'espace annulaire externe (51) en flux de comburant contrarotatifs autour dudit axe (2).
e) les orifices d'injection de carburant (46, 47) sont inclinés radialement de telle manière que le carburant fourni par chaque rangée d'orifices (46, 47) est injecté dans l'espace annulaire correspondant (50, 51) dans le sens de circulation circonférentielle du flux de comburant alimentant ledit espace annulaire (50, 51).

2. Chambre selon la revendication 1, **caractérisée par le fait que** les axes des orifices (46, 47) sont décalés radialement d'un angle compris entre 40° et 50°.

3. Chambre selon l'une quelconque des revendications précédentes, **caractérisée par le fait que** la rampe d'injection (42) de chaque injecteur (40) comporte deux surfaces coniques (43, 44) convergeant vers l'intérieur de l'enceinte de combustion (7) sur chacune desquelles débouchent les orifices d'une rangée d'orifices (46, 47) d'injection de carburant, lesdits surfaces (43, 44) étant reliées en amont par une surface torique (45).

4. Chambre selon la revendication 3, **caractérisée par le fait que** la partie torique (45) de la rampe d'injection (42) est encastrée dans une échancrure (33) arquée d'un fourreau (32) qui présente deux parois obliques (34, 35) à l'entrée de l'échancrure (33) pour permettre le positionnement de ladite rampe (42) dans ladite échancrure (33) lors du montage, ledit fourreau (32) étant monté avec jeu en amont des vrilles interne (22) et externe (26) entre deux entretoises successives (30).

5. Chambre selon l'une quelconque des revendications précédentes **caractérisée en ce que** les viroles interne (16) et externe (17) comportent en aval de la rampe d'injection (42) une pluralité d'orifices (52, 53) d'injection de comburant.

## Patentansprüche

1. Ringbrennkammer mit einer Symmetrieachse (2), einer zu dieser Achse (2) ringförmigen. Innenwand (4) und einer ringförmigen Außenwand (5), einem Boden (6), der sich quer zu dieser Achse (2) erstreckt und in Zusammenwirkung mit dieser Innen- und Außenwand (4, 5) einen Verbrennungsraum (7) bildet, der hinten einen ringöörmigen Auslass (8) zum Abführen der Verbrennungsgase, eine Vielzahl von Brennstoff-Einspritzdüsen (40), die in Öffnungen angeordnet sind, die im Boden (6) ausgeführt sind, sowie eine Quelle für unter Druck stehenden Brennstoff aufweist,
**dadurch gekennzeichnet,**
**dass**
a) der Boden (6) einen inneren Ring (16) und einen äußeren Ring (17) enthält, die kreisförmig zu der genannten Achse (2) angeordnet sind und vor dem Verbrennungsbereich (7a) des Verbrennungsraums (7) eine sich nach hinten erweiternde Ringkammer (18) umgren zen, wobei der innere Ring (16) und der äußere Ring (17) an ihren vorderen Enden durch gleichmäßig beabstandete Stege (30) miteinander verbunden sind, welche zwischen sich gebogene Öffnungen (31) bilden;
b) jede Brennstoff-Einspritzdüse (40) eine gebogene Einspritzrampe (42) aufweist, die durch eine der genannten gebogenen Öffnungen (31) verläuft, so dass die Einspritzdüsen insgesamt eine unterbrochene, ringförmige Einspritzrampe bilden, die die Ringkammer, (18) in einen ringförmigen Innenraum (50), der von dieser Rampe (42) und dem inneren Ring (16) umgrenzt wird, und einen ringförmigen Außenraum (51), der von dieser Rampe (42) und dem äußeren Ring (17) umgrenzt wird, unterteilt;
c) die Einspritzrampe (42) eine innere Reihe von Öffnungen (46) und eine äußere Reihe von Öffnungen (47) aufweist, die dazu bestimmt sind, Brennstoff in den ringförmigen Innenraum (50) bzw. in den ringförmigen Außenraum (51) einzuspritzen;
d) der innere Ring (16) und der äußere Ring (17) eine innere Schleife (22) bzw eine äußere Schleife (26) vor den Reihen von Öffnungen (47, 46) aufweisen, die dazu bestimmt sind, den ringförmigen Innenraum (50) bzw. den ringförmigen Außenraum (51) mit um die Achse (2) gegenlaufenden Brennstoffflüssen zu versorgen;
e) die Brennstoffeinspritzöffnungen (46, 47) dergestalt radial geneigt sind, dass der von jeder Reihen von Öffnungen (46, 47) abgegebene Brennstoff in der Umfangszirkulationsrichtung des Brennstoffflusses, der diesen ringförmigen Raum (50, 51) versorgt, in den entsprechenden ringförmigen Raum (50, 51) eingespritzt wird.

2. Kammer nach Anspruch 1,
**dadurch gekennzeichnet,**
**dass** die Achsen der Öffnungen (47, 47) radial um einen Winkel zwischen 40° und 50° verschoben sind.

3. Kammer nach einem der vorherigen Ansprüche,
**dadurch gekennzeichnet,**
**dass** die Einspritzrampe (42) jeder Einspritzdüse (40) zwei konische Oberflächen (43, 44) aufweist, die zum Inneren des Verbrennungsraums (7) konvergieren und in denen die Öffnungen einer Reihe von Brennstoffeinspritzöffnungen (47, 47) münden, wobei diese. Oberflächen (43, 44) stromauf durch eine torusförmige Fläche (45) verbunden sind.

4. Kammer nach Anspruch 3,
**dadurch gekennzeichnet,**
**dass** der torusförmige Teil(45) der Einspritzrampe (42) in einen bogenförmigen Ausschnitt(33) einer Hülse (32) eingefügt ist, die am Ansatz des Ausschnitts(33)zwei schräge Wände (34, 35) aufweist, um bei der Montage die Positionierung dieser Rampe (42) in diesem Ausschnitt (33) zu ermöglichen, wobei diese Hülse (32) mit einem Spiel vor der inneren Schleife (22) und der äußeren Schleife (26) zwischen zwei aufeinander folgenden Stegen (30) eingesetzt wird.

5. Kammer nach einem der vorherigen Ansprüche,
**dadurch gekennzeichnet,**
**dass** der innere Ring (16) und der äußere Ring (17) hinter der Einspritzrampe (42) eine Vielzahl von Brennstoff-Einspritzöffnungen (52, 53) aufweisen.

## Claims

1. Annular combustion chamber having an axis of symmetry (2), an internal (4) and an external (5) wall which are annular with respect to the said axis (2), an end (6) which runs transversely with respect to the said axis (2) and which, in collaboration with the said internal (4) and external (5) walls delimits a combustion chamber (7) which downstream has an annular outlet (8) for the exhausting of the combustion gases, a plurality of fuel injectors (40) arranged in openings made in the end (6), and a source of pressurized oxidizing air, **characterized in that**
a) the bottom (6) comprises an internal shell ring (16) and an external shell ring (17) which are annular with respect to the said axis (2) and delimit, upstream of the combustion zone (7a) of the combustion chamber (7), an annular chamber (18) widening in the downstream direction, the internal (16) and external (17) shell rings being connected at their upstream ends by uniformly spaced spacer pieces (30) which between them delimit arced openings (31);
b) each fuel injector (40) comprises an arced injector set (42) passing through one of the said arced openings (31) in such a way that all of the injectors together form a discontinuous annular injection set dividing the annular chamber (18) into an internal annular space (50) delimited by the said set (42) and the internal shell ring (16) and into an external annular space (51) delimited by the said set (42) and the external shell ring (17);
c) the injection set (42) comprises an internal row of orifices (46) and an external row of orifices (47) which are intended to inject fuel into the internal annular space (50) and the external annular space (51), respectively;
d) the internal shell ring (16) and the external shell ring (17) respectively comprise an internal twist (22) and an external twist (26) upstream of the rows of orifices (46, 47) intended to feed the internal annular space (50) and the external annular space (51) respectively with streams of oxidizing air contra-rotating about the said axis (2).
e) the fuel injection orifices (46, 47) are inclined radially in such a way that the fuel supplied by each row of orifices (46, 47) is injected into the corresponding annular space (50, 51) in the direction of circumferential flow of the stream of oxidizing air feeding the said annular space (50, 51).

2. Chamber according to Claim 1, **characterized in that** the axes of the orifices (46, 47) are radially offset by an angle of between 40° and 50°.

3. Chamber according to either one of the preceding claims, **characterized in that** the injection set (42) of each injector (40) comprises two conical surfaces (43, 44) converging towards the inside of the combustion chamber (7), on each of which surfaces the orifices of a row of fuel injection orifices (46, 47) open, the said surfaces (43, 44) being connected upstream by a toric surface (45).

4. Chamber according to Claim 3, **characterized in that** the toric part (45) of the injection set (42) is set into an arced cut-out (33) of a sleeve (32) which has two oblique walls (34, 35) at the entry to the cut-out (33) so as to allow the said set (42) to be positioned in the said cut-out (33) during mounting, the said sleeve (32) being mounted with clearance upstream of the internal (22) and external (26) twists, between two successive cut-outs (30).

5. Chamber according to any one of the preceding claims, **characterized in that** the internal (16) and external (17) shell rings comprise, downstream of the injection set (42), a plurality of oxidizing air injection orifices (52, 53).
